# EUROPEAN PATENT APPLICATION

(11) **EP 4 328 934 A1**
(43) Date of publication of application: **28.02.2024**
(21) Application number: 23193490.2
(22) Date of filing: 25.08.2023
(51) Int. Cl.: H01B 1/02, H01B 1/04

(54) **COATING ON A SURFACE TO TRANSMIT ELECTRICAL CURRENT**

(30) Priority: 26.08.2022 EP 22192362
(71) Applicant: TE Connectivity Solutions GmbH, 8200 Schaffhausen (CH)
(72) Inventor: Buresch, Isabell, 73499 Woert (DE); Puippe, Jean-Claude, 1618 Châtel-St-Denis (CH)
(74) Representative: Grünecker Patent- und Rechtsanwälte PartG mbB

(57) **Abstract**

The present invention relates to a coating (1) on a surface (101) of a substrate (100), the coating (1) designed to transmit electrical current in an automotive plug connection for charging an EV- battery and having layers (10, 20, 30) of different microstructures and performances which extend at least essentially in parallel to the surface (101) comprising: at least one fine-grained layer (20) containing silver grains (21) exhibiting a nano-crystalline grain size, i.e. an average grain size below 1000 nanometers, in particular above 300 nanometers, with graphite particles (22); and at least one coarse-grained layer (30) located adjacent to the fine-grained layer (20) and containing predominantly or exclusively silver grains (31) exhibiting a grain size which is on average larger than that of the fine-grained layer (20). The coating (1) may further comprise at least one outermost surface layer (10) containing silver grains (11), where the outermost surface layer (10) preferably exhibits a nano-crystalline size, i.e. an average grain size at least below 1000 nanometers, and preferably contains graphite particles (12).

## Description

The present invention relates to a coating on a surface of a substrate. The coating is particularly designed to transmit electrical current in an automotive plug connection, especially a termination for charging a battery of an **e**lectrically driven **v**ehicle (EV).

The present invention also relates to an electric charging contact with a coating for use in an automotive charging inlet and a charging gun.

The present invention further relates to an automotive charging connector, in particular comprising a charging inlet and/or a charging gun, comprising an electric charging contact with a coating, where the automotive charging connector is part of an automotive plug connection for charging an EV-battery.

The electric charging contacts in an automotive charging connection on an infrastructural side (which typically comprises the charging gun and which is the complement to the electrically driven vehicle typically having a charging inlet side) coated with a coating as described further throughout the present application are part of this invention as the electric charging contacts are provided to be part of the automotive charging connection.

High power charging (HPC) of EV-batteries is relying on ever increasing currents in order to reduce the charging time for a e.g. 100 kWh battery from 30 to 5 minutes, for example. To transmit electrical current, especially in HPC applications, to charge a drive battery, electric charging contacts are necessitated that can transmit high electrical currents (e.g. above 200 A) especially at high voltages (e.g. above 100 V, 200 V or 400 V) with a low contact resistance and can endure many mating cycles (e.g. at least 10.000, 20.000 or 40.000) without providing a remarkable increase in contact resistance. The critical point is the wear behavior and the electrical contact resistance of the charging contact, possibly leading to Joulean heating and/or derating of the electrical current.

Silver (Ag) has been evolved as a promising material to be used as a coating on parts out of copper or copper alloys, providing a good electrical conductivity and wear behavior. The coating comprising silver may be provided by use of electro-deposition processes. However, silver or predominantly metallic (hard) silver alloys still undergo wear, due to mating cycles, especially when it comes 3000 or more mating cycles. Increasing the hardness of the coating by alloying the silver coating is known, but may increase the contact resistance in an unwanted manner. It is further known that graphite (C) particles may be added to a silver alloy to provide inherent lubrication to the coating. An increase in contact resistance can happen and is mostly related to the codeposited organics. By increasing the thickness of the silver coating, wear behavior is enhanced, but costs increase unwantedly.

It is an object of the invention to increase the wear behavior, stabilize the contact resistance at the level of pure Ag and decrease the costs by reducing the coating thickness to produce a coating on a substrate. It is a further object to provide an electric charging contact with the coating and an automotive plug connector / charging inlet with the coating.

The solution according to the invention is provided by the subject-matter of claims 1, 12, 13 and 15. Preferred embodiments are subject-matter of the dependent claims.

In particular, a coating on a surface of a substrate is suggested, the coating designed to transmit electrical current in an automotive plug connection for charging an EV- battery and having layers of different microstructures and performances which extend at least essentially in parallel to the surface, wherein the coating comprises:
- at least one layer containing silver grains exhibiting a nano-crystalline grain size, i.e. an average grain size below 1000 nanometers (nm), in particular above 1, 50 or 300 nanometers with graphite particles; and
- at least one coarse-grained layer located adjacent to the fine-grained layer and containing predominantly or exclusively silver grains exhibiting a grain size, which is on average larger than that of the fine-grained layer.

The layers of different microstructures and performances are particularly limited in thickness and are regularly thinner than the coating in total; the same is particularly true with regard to width. The layers of different microstructures and performances may each comprise or consist of a plurality of grains and/or phases, especially silver-based ones, especially different in arrangement, distribution, shape and/or size of the grains and/or phases, and in particular one or more of said layers may comprise graphite particles and/or other self-lubricated / self-lubricating particles like PTFE-particles or Sulfide-containing particles for example.

In general, the particles, i.e. particles mentioned herein such as the self-lubricating particles, graphite particles, or the like, are embedded within and/or between the layers. This usually means that the particles are surrounded by the microstructure and/or the layers. This serves for a good mechanical and physical connection of the particles to the layers.

The fine-grained layer may be an intermediate layer or/and a top layer, meaning that the intermediate fine-grained layer is located, especially along the thickness of the coating in parallel to the interface base material - coating, in between and/or beneath other layers.

The coating described herein can be produced by electro-deposition with additional mechanical impact, where the mechanical impact may serve to crush the particles or apply high energy density locally affecting the growth/development of the microstructures so that both fine-grained and coarse-grained layers as well as the extension at least essentially in parallel to the surface may be achieved.

The "performance" of a layer relates to its mechanical and its electrical properties. As per a different microstructure of any layer typically a different performance of said layer results. Therefore, it is desired that different layers throughout the coating may comprise such different properties so that a synergetic effect from a combination may be achieved.

The nano-crystalline grain size enables a strengthening effect and/or strength increase of the coating, in particular Hall-Petch strengthening, even in cases where the nano-crystalline grain size is not present across the entire coating. An increase in coating strength correlated to improved hardness values, such that the wear behavior during friction atop the coating at a similar contact resistance is enhanced. The graphite additionally enables a self-lubricating effect of the coating which is useful in electric plug connections with high mating cycle requirements, in particular HPC applications, further reducing/limiting wear behavior at a low contact resistance. From the spread essentially in parallel to the surface, which is the mating direction, it results advantageously that the wear behavior is further increased, since in a top view on the coating a larger area atop the surface of the substrate is covered with coating material, e.g. layers, of increased hardness with nano-crystalline grains. It also usually results that the surface becomes smoother compared to prior art.

The invention provides that there is no or at least a lot less wear during 20.000 - 50.000 mating cycles compared to state of the art coatings comprising silver and graphite at a lower coating thickness. This enables fast charging without derating of the current within e.g. 5 min. and/or a lifetime durability of the coated contacts and sockets at lower cost. The problematic black finger / black tray effect is almost eliminated due to the smooth surface. After all, the invention therefore provides enhanced sustainability.

In addition, the invention enables a reduction in coating thickness compared to the state of the art, especially compared to rack plating. This not only saves production time, but also necessitates less electrolyte in electro-deposition and less noble metal use. This as well is cost saving and sustainability increasing.

At least one outermost fine-grained surface layer containing silver grains may be provided. The outermost fine-grained surface layer is particularly located above the remaining layers and/or constituents of the coating. The wear behavior of the surface of the coating may be enhanced locally or at least essentially across the entire or almost the entire surface of the coating.

The outermost fine-grained surface layer, being the top surface layer, may exhibit a nano-crystalline grain size, which particularly means that an average grain size is at least below 1000 nanometers and/or at least above 1 nanometer, in particular above 300 nanometers, in order to further enhance wear behavior especially in case of a new coating to be used during transmission of electrical current.

If the outermost fine-grained surface layer contains especially randomly distributed graphite particles, the self-lubricating effect takes place.

The graphite particles of the outermost fine-grained surface layer may have a nano-scale size, which particularly means that an average graphite particle size is at least below 1000 nanometers and/or at least above 1 nanometer, in particular below 750, 500 or 250 nanometers.

As indicated before, the graphite particles are preferably embedded in the fine-grained layers and in the outermost fine-grained surface layer in order to stabilize the position of the particles relative to the layers.

The graphite particles, especially of the outermost fine-grained surface layer, are especially extended and/or distributed at least essentially in parallel to and/or along the surface and/or at least one of the layers.

After all, especially if the outermost fine-grained surface layer covers the surface at least essentially or with a thickness fraction of at least 1 %, 5%, 10 %, 25 %, 50 %, 75 % or more, the coating may not only comprise a smoother surface, but better wear behavior and better self-lubricating properties. Based on the thought that the coating may be arranged on top of the substrate with the surface, the outermost fine-grained surface layer "covers" the surface in any substrate surface location above which the outermost surface area is present. The outermost surface area does not need to contact the surface of the substrate in order to "cover" said surface in the described sense.

In particular, the graphite particles, particularly of the outermost fine-grained surface layer and/or the fine-grained layer, may exhibit a nano-scale size, which particularly means that an average particle size is at least below 1000 nanometers and/or at least above 1 nanometer, in particular below 750, 500 or 250 nanometers. Said graphite particles are especially extended and/or distributed at least essentially in parallel to the surface and/or at least one of the fine-grained layers. The graphite particles may as well be extended at least essentially along, especially in parallel to, at least one of the layers and/or the surface. This assures an increased presence of the lubricating effect.

When the lattice structure and/or crystal structure of the graphite particles is hexagonal 2H, the self-lubricating effect is enhanced and the formation of the layers including the spread essentially in parallel to the surface is facilitated during the coating process. If in addition to that the lattice structure of the silver matrix shows a 3C or/and a 4H modification the wear resistance will be improved much more.

Especially the outermost fine-grained surface layer with at least one or all of the features described above related to the outermost fine-grained surface layer enables that the black finger/tray effect is eliminated and that the surface becomes smoother as opposed to the prior art coatings.

The silver grains in the coarse-grained layer and/or other silver grains with epitaxial growth, especially at least essentially silver grains serving as a matrix to the fine-grained layer, may have grain orientation distribution of <311> : <111>:<220> = 1 : 0.74 : 0.46. Said silver grains may alternatively or additionally exhibit a matrix with a 001 and 111 texture which correlates with the 3C or/and 4H modification mentioned above. The layers of different microstructures may form advantageously with a ratio 1:10 up to 1:300.

Two or more (e.g. three, four or five) of the fine-grained layers, especially different layers, may be stacked atop the surface at least on average along a section of the surface. "Section" is meant particularly in terms of an area on the surface. Therefore, layers may be arranged locally atop each other across the surface to the outermost surface on the coating, especially wherein the layers may contact each other or are at least partially spaced apart from each other (e.g. by a further layer, further grains, further particles, and/or others).

The coarse-grained layer may exhibit a micro-crystalline grain size, i.e. an average grain size at least above 1 micrometer and below 1000 micrometers, in particular below 10 micrometers. The coarse-grained layer, in particular a plurality of coarse-grained layers, may therefore kind of serve as a matrix containing the outermost fine-grained surface layer and/or the fine-grained intermediate layers. The essentially larger grains can provide e.g. ductility in contrast to the hardness from the fine-grained layers essentially contained in and/or surrounded by the coarse-grained layer.

Below the coarse-grained layer an especially (fine-grained) adhesion layer out of or comprising: Sn and/or Pd and/or Ag and/or Ni and/or Fe and/or a Cu-flash may be deposited, in particular directly on the substrate. The coarse-grained layer therefore may be located above the adhesion layer. In particular, the adhesion layer may be located below the coarse-grained layer located closest to the surface of the substrate and/or below at least essentially each, in particular below more than 80% or 90%, of the coarse-grained layers. The adhesion layer may be part of the coating or may be part of the substrate. The adhesion layer may advantageously support the mechanical properties of the coating in that the coating (or relative to the adhesion layer the rest of the coating) connects better to the substrate via the adhesion layer. There may be less risk of delamination of the coating.

Another solution is suggested by a coating on a surface of a substrate, the coating designed to transmit electrical current in an automotive plug connection for charging an EV-battery, especially with an automotive charging connector comprising a charging inlet and/or a charging gun, and having layers of different microstructures and performances which extend at least essentially in parallel to the surface. Said coating comprises:
- at least one fine-grained layer containing silver grains exhibiting a nano-crystalline grain size, i.e. an average grain size below 1000 nanometers, in particular above 1, 50 or 300 nanometers, and self-lubricating particles like Graphite and/or Nano-diamond and/or Graphene and/or CNT's, Lead (Pb), Molybdenum (Mo), Mo-Sulfide, Ag-Sulfide, W-Sulfide, Polytetrafluoroethylene (PTFE) or Carbon Fluoride (CFx), wherein the self-lubricating particles have a particle size less than 1000 nanometers, in particular above 1, 50 or 300 nanometers ; and
- at least one coarse-grained layer located adjacent to the fine-grained layer and containing predominantly or exclusively silver grains exhibiting a grain size which is on average larger than that of the fine-grained layer.

It has been found that the self-lubricating particles may replace or be supplemented by graphite particles. The self-lubricating particles as described above are beneficial for a low coefficient of friction of the coating, resulting in less wear of the coating during use. This coating may make use of any of the features and advantages, especially in applications, mentioned above.

Further, an electric charging contact that is provided for use in an automotive plug connection with/using an automotive charging inlet and /or a charging gun making the charging connection having a substrate out of copper or copper alloys or Al- or Al-alloys with a coating such as one of the coatings described above is suggested as a solution.

The contact may make use of any of the features and advantages, especially in part, and be used in applications as mentioned above.

The substrate at least predominantly may comprise copper or a copper alloy or Al- or a Al-Alloy, so that good electrical conductivity is given at acceptable cost (versus a silver alloy).

The substrate especially may be, at least partially, rotationally symmetric and/or flat, in particular so that the connection can be realized by mating in rotational barrel/socket or flat receptacle positions, where at least one or both of two corresponding electric charging contacts may be connected with a flat or a round cable, especially by bolting and/or welding.

Further, an automotive charging connector with at least one of the above-described electric charging contacts is suggested. The charging connection may comprise a charging inlet and/or a charging gun and may in particular be used in an automotive plug connection for charging an EV-battery.

In case of two or more contacts, the contacts may be extended essentially in parallel to each other so that a mating of corresponding electric charging contacts is facilitated and so that there is less friction on the coating.

The automotive charging connector may comprise a housing holding the contact or contacts. The housing may consist of and/or be made from polymer/resins. The housing may serve as an electrical isolator and/or protector for the contact and can in addition be completed / complemented by a shielding out of metal.

The automotive charging connector may comprise an additional housing and/or an additional active and/or passive cooling element. The additional housing may serve to further protect the electric charging contacts. The cooling element may prevent overheating and/or derating.

The housing and/or additional housing may surmount and/or overtop at least one of the electric charging contacts in a or the mating direction in order to avoid damage to the electric charging contacts, e.g. from unwanted collisions, and in order to enhance security.

Further details and advantages of the present invention will be apparent from the following description of the state of the art and an embodiment in conjunction with the drawings:
Figure 1A a cross section of a coating as per **state of the art** in SEM analysis;
Figure 1B the cross section of the coating as per **state of the art** in EBSD analysis;
Figure 2A a cross section of a coating according to the invention in SEM analysis;
Figure 2B the cross section of the coating according to the invention in EBSD analysis;
Figure 3A-C a FIB lamella of the coating according to the invention in SEM analyses, in an overall view (3A), in a region with fine-grained and coarse-grained layers (3B) and in a region with an outermost fine-grained surface layer (3C).

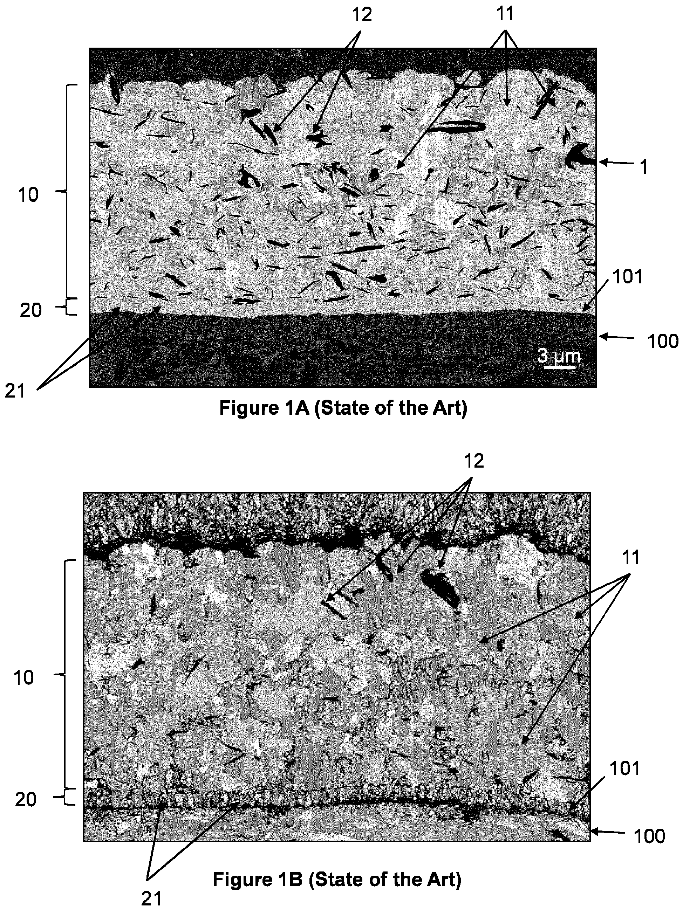

Figure 1A shows a coating 1 on a surface 101 of a substrate 100 according to the state of the art. The coating 1 as per state of the art may be produced by use of electro-deposition, especially a rack plating process. The coating 1 is designed to transmit electrical current in an automotive plug connection for charging an EV-battery. The microstructure of the prior art coating 1 predominantly comprises two layers 10, 20 directly atop each other, one of which being an outermost surface layer 10 exhibiting randomly distributed silver grains 11 and embedded graphite particles 12. The graphite particles 12 are oriented randomly within the layer 10 and/or coating 1.

The other layer 20 in Figure 1A is an adhesion layer that is adjacent to the base material 100 and is in direct contact with the outermost layer 10. The fine-grained layer 20 serves as an adhesion layer and consists of silver grains 21 and/or nickel grains and/or Cu-grains. The two layers 10, 20 run along and essentially in parallel to the substrate interface 101.

A Cu-flash may be located below the layer 20 and atop the substrate interface 101, not only in this state of the art example, but as well in combination with any coating 1 of the invention.

It can be seen that the graphite particles 12 reach up to the surface of the outermost fine-grained surface layer 10, likely being responsible for a not closed surface of the coating 1 and the black finger/tray effect during handling and assembling. The coating 1 as per state of the art is rough and not "closed".

Figure 1B shows the coating 1 according to the state of the art in an EBSD analysis image, wherein the colors of the original microscopic image have been converted to a grey scale. Despite the lack in colors, it can be seen that the coating in the outermost surface layer 10 predominantly comprises a plurality of micro-crystalline silver grains 11, i.e. with a size above 0,5 up to 10 micrometers, and the graphite particles 12.

The fine-grained layer 20 directly under the outermost surface layer 10 and directly atop and running along the substrate interface 101 exhibits a nano-crystalline silver grain 21 size, i.e. with an average grain size below 1 or 0,5 micrometers.

In other words, the prior art consists of an outermost surface layer 10 and a fine-grained adhesion layer 20. The outermost surface layer 10 exhibits micro-crystalline grains (silver grains 11) and graphite particles 12, wherein the outermost surface 10 layer is located directly atop the fine-grained layer 20. The fine-grained layer 20 consists of nano-crystalline silver grains 21. The fine-grained layer 20 has no graphite particles embedded / co-deposited (therefore no reference can be written).

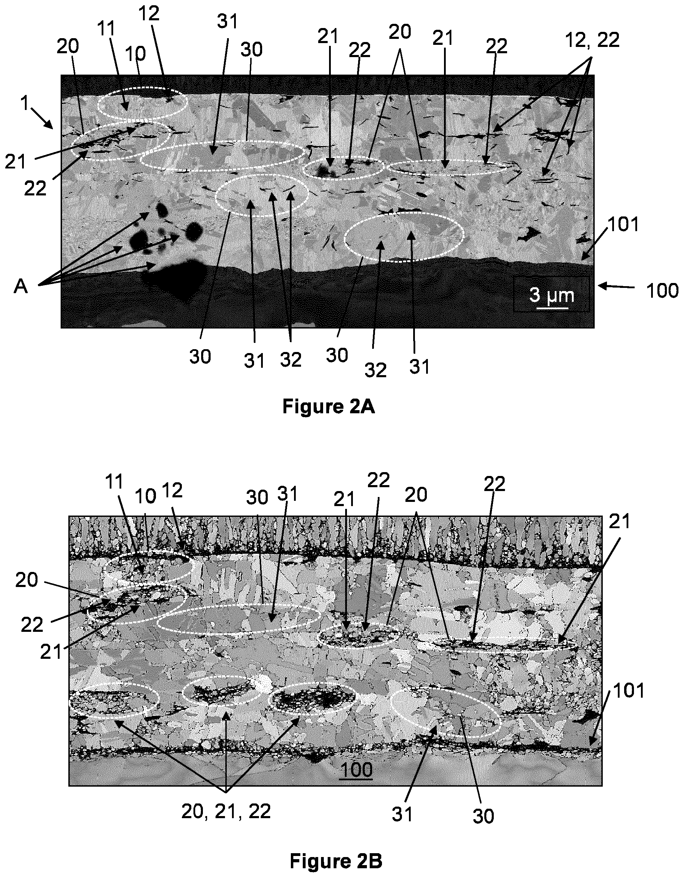

Figures 2A-B show a coating 1 on a surface 101 of a substrate 100, the coating 1 designed to transmit electrical current in an automotive plug connection for charging an EV-battery. The coating 1 has layers 10, 20, 30 of different microstructures and performances which are extended essentially in parallel to the surface 101. The coating 1 may be produced by use of electro-deposition with mechanical impact, where the mechanical impact may serve to crush graphite particles 12, 22, 32 during the electro-deposition process.

As compared to the state-of-the art an additional layer, for example an adhesion layer, and/or a Cu-flash, preferably deposited directly on the substrate, may also be provided.

At least partially, in Figures 2A-B there is the least one outermost fine-grained surface layer 10 which contains silver grains 11 exhibiting a nano-crystalline grain size with an average grain size below 1000 nanometers and above 300 nanometers, and which outermost fine-grained surface layer 10 further contains embedded graphite particles 12. The graphite particles 12 have a nano-scale size such as an average size at least below 1000 nanometers, in particular below 250 nanometers. The graphite particles 12 are spread at least essentially along the layer 10 and the surface 101.

The coating 1 comprises several intermediate fine-grained layers 20 containing silver grains 21 exhibiting a nano-crystalline grain size, meaning an average grain size below 1000 nanometers and above 300 nanometers and containing embedded graphite particles 22 - all oriented parallel to the surface 101 of the substrate 100. The graphite particles 22 have a nano-scale size such as an average size at least below 1000 nanometers, in particular below 250 nanometers. The graphite particles 22 are extended at least essentially along the layer 20 and the surface 101.

Further, the coating 1 of Figures 2A-B comprises several coarse-grained regions and/or coarse-grained layers 30 located adjacent to at least one of the other layers 10, 20 and containing predominantly silver grains 31 (among mostly some occurrences of embedded graphite particles 32) exhibiting a grain size which is on average, here at least an order of magnitude, larger than that of the fine-grained layer 20 and/or the outermost fine-grained surface layer 10. The silver grains 31 of the coarse-grained layers 30 serve as a matrix embedding intermediate fine-grained layers 20 followed by an outermost fine-grained surface layer 10, 20 which has a higher hardness and less ductility than the coarse silver grains 31. It is noted that Figure 2A exhibits measurement artefacts A to be identified through their blurred borders.

In principle, the graphite particles 12, the graphite particles 22, and the graphite particles 32 may be the same graphite particles or at least similar ones, especially in terms of crystal-structure. But the graphite particles 12, 22, 32 may as well be different ones in size.

Here, the graphite particles 12 correspond to the outermost fine-grained surface layer 10, the graphite particles 22 correspond to the fine-grained layer 20, and the graphite particles 32 correspond to the coarse-grained layer 30. As such, in the case the layers 10, 20, 30 cannot be distinguished sharply as it may be the case from process uncertainties from known coating processes, the correspondences of individual graphite particles 12, 22, 32 may fall differently. Essentially the same is noted analogously with regard to the silver grains 11, 21, 31, wherein silver grains 11 and 21 each correspond to a fine-grained layer 10 or the fine-grained layer 20 silver grains like 30 belong to the coarse-grained layer 30, respectively, but where merely unsharply distinguishable layers 10, 20, 30 result in the issue discussed above.

In Figure 2A-B, the outermost fine-grained surface layer 10 covers the whole surface in different thicknesses, the thicker part has an area fraction of at least 10 %, wherein merely the shown cross section is evaluated for this value of the areal fraction. The areal fraction with higher film thickness of the fine-grained layer may be different, especially higher, in other locations.

The crystal structure of the graphite particles 12, 22, 32 is in all cases (i.e. in the outermost fine-grained surface layer 10, in the intermediate fine-grained layer 20 and in the coarse-grained layer 30) hexagonal 2H. Further, for example, two of the layers 30, 32 are stacked atop the substrate interface 101. The coarse-grained layer 30 exhibits a micro-crystalline grain size, i.e. an average silver grain 31 size at least above 1 and below 1000 micrometer(s), here as well below 5 micrometers.

It is evident in the comparison with the prior art coating 1 (Figures 1A-B) that the coating 1 according to the invention (Figures 2A-B) differs in graphite particle 12, 22, 32 size, distribution and extension. The graphite particles 12, 22, 32 are extended predominantly essentially in parallel to the surface 101 of the substrate 100 according to the invention. The silver grain 11, 21 size in the outermost fine-grained surface layer 10 and as well in the fine-grained layer 20 is on average smaller according to the invention in comparison to the prior art of Figures 1A-B. Silver grains 11, 21, 31 in general are rather layered (Figures 2A-B) as opposed to the silver grains 11, 21 being randomly extended/grown epitaxial in the prior art (Figures 1A-B). According to the invention, the graphite particle 12, 22, 32 content is different (especially lower) and the surface roughness values, e.g. Ra or Rz values, are a lower (the surface of the coating 1 is smoother) compared to the prior art.

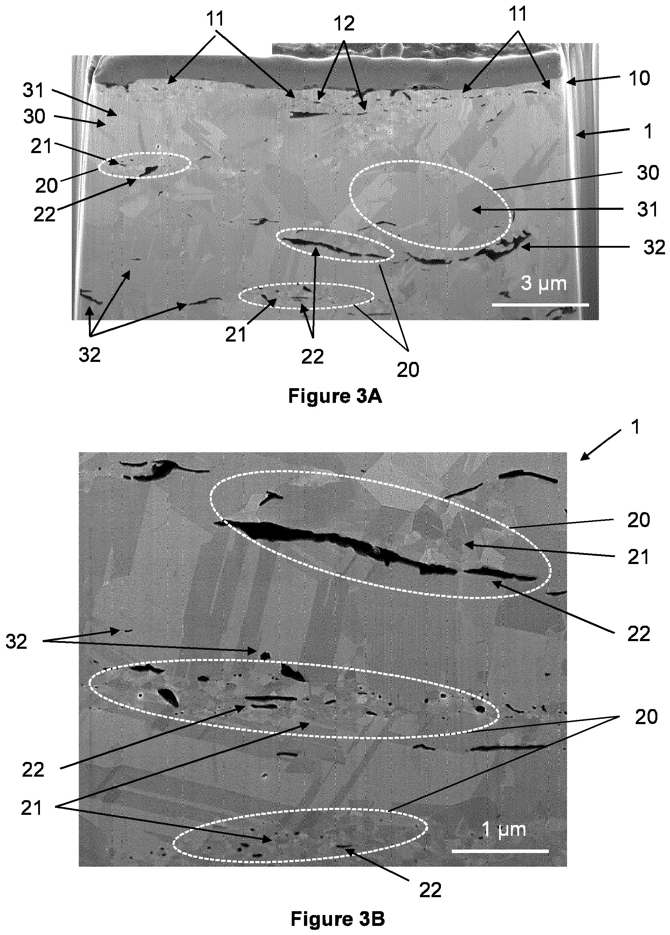

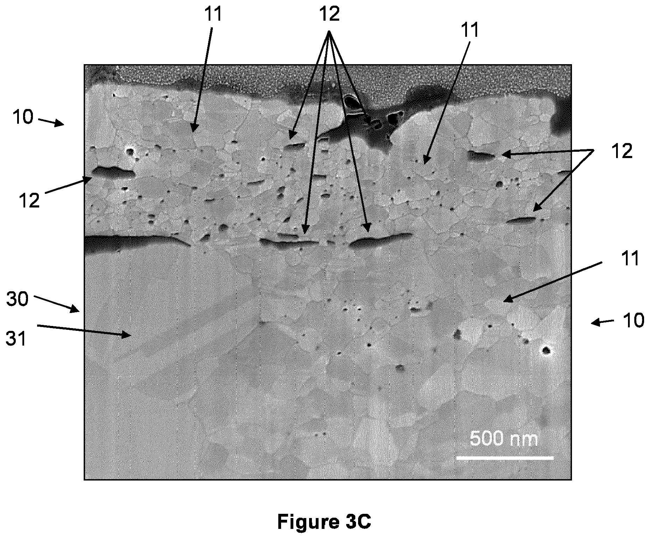

Figure 3A-C shows a section seen in SEM of a FIB cut of a coating on an electric charging contact for use in an automotive plug connection having a substrate 100 with a coating 1 according to the invention. The coating 1 has layers 10, 20, 30 of different microstructures which are extended essentially in parallel to a surface 101 of the substrate 100. The surface/interface 101 is not shown in the Figures 3A-C, but is how ever extended essentially in parallel to the bottom or top edge of the Figure 3A-C.

As can be seen best in Figures 3A and 3B, there are fine-grained layers 20 containing graphite particles 22 exhibiting a nano-scale size, and containing silver grains 21 exhibiting a nano-crystalline grain size and there are coarse-grained layers 30 adjacent to the fine-grained layers 20 containing almost exclusively silver grains 31 (again, as in Figures 2A-B, among some graphite particles 32) exhibiting a silver grain 31 size which is on average larger than that of the fine-grained layer 20, in particular exhibiting a micro-crystalline grain size (grain size > 1 µm). In addition, there is an outermost fine-grained surface layer 10 that contains silver grains 11 exhibiting a nano-crystalline grain size (in particular 300 nm < grain size < 1000 nm) and that contains graphite particles 12 exhibiting a nano-scale size (in particular 1 nm < size < 250 nm). Here, the outermost fine-grained surface layer 10 covers the coating at least essentially with an areal fraction of more than 75 %, in particular at least almost entirely.

The crystal structure of the graphite particles 12, 22, 32 is especially hexagonal 2H. On average, at least two of the layers 10, 20, 30 are stacked atop the surface 101.

The coating 1 is provided on the substrate 100 that is made from copper or a copper alloy, Al- or an Al-alloy, wherein coating 1 and substrate 100 at least essentially form an electric charging contact. The contact is at least partially rotationally symmetric or flat along a not shown horizontal axis under the surface 101.

Not shown is an automotive plug connection with the electric charging contact, where the connection may comprise a housing holding the contact and/or made from polymer/resins, in particular with or without a shielding out of metal and in special cases with additional features for cooling the connection.

In other words, according to the invention, especially Figures 2A-B and/or 3A-C:
there may be harder nano-crystalline intermediate layers (outermost fine-grained surface layer 10 and fine-grained layer 20) at least partially surrounded by silver grains 31 (of the coarse-grained layer 30) especially exhibiting a micro-crystalline microstructure;
there may be a nano-crystalline boundary hardened top surface layer (outermost fine-grained surface layer 10) and/or the fine-grained layer 20 reducing wear, in particular with embedded graphite particles 12 and 22;
there may be strictly extended (small) dispersoid particles (graphite particles 12 and 22 of the outermost fine-grained surface layer 10 or the fine-grained layer 20, respectively) reducing wear;
there may be strictly extended (small) dispersoid particles (graphite particles 32 of the coarse-grained layer 30) reducing wear, although this effect may be subordinate to the graphite particles 12 and 22 of the outermost fine-grained surface layer 10 or the fine-grained layer 20, respectively;
there may be a smooth and/or closed surface (especially the outermost fine-grained surface layer 10) of the coating 1 with embedded graphite particles 12, 22, 32 (especially graphite particles 12 of the outermost fine-grained surface layer 10) to avoid black finger/tray effect;
there may be a specific grain extension and distribution relative to and essentially in parallel to the surface 101 of the substrate 100;
the coarse-grained layer 30 may have and/or surround graphite particles 32, especially less graphite particles 32 than graphite particles 12 and/or 22 in the other layers 10, 20; and/or
the coating 1 may not entirely consist out of a layered combination of outermost fine-grained surface layers 10, fine-grained layers 20 and coarse-grained layers 30, but rather of a layered microstructure where locally such layers 10, 20, 30 are identified in between and/or surrounded by silver grains 11, 21, 31 in general, and where graphite particles 12, 22, 32 may be present in between and/or surrounded by silver grains 11, 21, 31, especially even between coarse silver grains 31 of the coarse-grained layer 30.

### References

- 1: coating

- 10: outermost fine-grained surface layer
- 11: silver grain, phase
- 12: graphite particle

- 20: fine-grained intermediate layer
- 21: silver grain, phase
- 22: graphite particle
- 23: particle, e.g. PTFE and/or Mo-Sulfide

- 30: coarse-grained layer
- 31: silver grain, phase
- 32: graphite particles

- 100: substrate
- 101: surface of the substrate

- A: artefacts

## Claims

1. Coating (1) on a surface (101) of a substrate (100), the coating (1) designed to transmit electrical current in an automotive plug connection for charging an EV-battery and having layers (10, 20, 30) of different microstructures and performances which extend at least essentially in parallel to the surface (101) comprising:
- at least one fine-grained intermediate layer (20) containing silver grains (21) exhibiting a nano-crystalline grain size, i.e. an average grain size below 1000 nanometers and in particular above 300 nanometers, and graphite particles (22);
- at least one coarse-grained layer (30) located adjacent to the fine-grained layer (20) and containing predominantly or exclusively silver grains (31) exhibiting a grain size which is on average larger than that of the fine-grained layer (20).

2. Coating (1) according to claim 1, **characterized by** further comprising:
- at least one outermost fine-grained surface layer (10) containing silver grains (11);

3. Coating (1) according to claim 2, **characterized by** the outermost fine-grained surface layer (10) exhibiting a nano-crystalline grain size, i.e. an average grain size at least below 1000 nanometers, in particular above 300 nanometers.

4. Coating (1) according to claim 2 or 3, **characterized by** the outermost fine-grained surface layer (10) containing graphite particles (12).

5. Coating (1) according to any of the claims 2 to 4, **characterized in that**, the outermost fine-grained surface layer (10) covers the surface (101) at least essentially or with an areal fraction of at least 10%, 25 %, 50 %, 75 % or more.

6. Coating (1) according to any of the previous claims, **characterized by** the graphite particles (12, 22) having a nano-scale size, i.e. an average size at least below 1000 nanometers, especially below 250 nanometers in the fine-grained layers.

7. Coating (1) according to any of the previous claims, **characterized by** the graphite particles (12, 22) being extended at least essentially along their layer (10, 20) and/or parallel to the surface (101).

8. Coating (1) according to any of the previous claims, **characterized in that** the crystal structure of the graphite particles (12, 22) is hexagonal graphite 2H.

9. Coating (1) according to any of the previous claims, **characterized in that**, at least on average along a section of the surface (101), two of the layers (10, 20, 30) are stacked atop the surface (101).

10. Coating (1) according to any of the previous claims, **characterized in that** the coarse-grained layer (30) exhibits a micro-crystalline grain size, i.e. an average grain size at least above 1 micrometer and below 1000 micrometers, in particular below 5 micrometers.

11. Coating (1) according to any of the previous claims **characterized that** below the coarse-grained layer (30), especially the coarse-grained layer (30) located closest to the surface (101), an adhesion layer out of Ag, Ni, Pd, Fe, Sn and/or a Cu-flash is deposited, especially directly, on the surface (101) of the substrate (100).

12. Coating (1) on a surface (101) of a substrate (100), the coating (1) designed to transmit electrical current in an automotive plug connection for charging an EV-battery having layers (10, 20, 30) of different microstructures and performances which extend at least essentially in parallel to the surface (101) comprising:
- at least one fine-grained layer (20) containing silver grains (21) exhibiting a nano-crystalline grain size, i.e. an average grain size below 1000 nanometers and in particular above 300 nanometers, and self-lubricating particles (23) comprising at least one of: Nano-diamond, Lead (Pb), Molybdenum (Mo), Mo-Sulfide , Polytetrafluoroethylene (PTFE), CNT's, Graphene, Ag-sulfide, W-sulfide or Carbon Fluoride (CFx) in particular the self-lubricating particles (23) are graphite particles (22);
- at least one coarse-grained layer (30) located adjacent to the fine-grained layer (20) and containing predominantly or exclusively silver grains (31) exhibiting a grain size which is on average larger than that of the fine-grained layer (20) with fewer and bigger self-lubricating particles like Graphite.

13. Electric charging connector, wherein the electric charging contact is provided for use in an automotive plug connection comprising a charging inlet and/or a charging gun, the electric charging contact having a substrate (100) with a coating (1) according to any of the claims 1 to 12.

14. Electric charging contact according to claim 13, **characterized in that** the substrate (100) at least predominantly comprises copper or a copper alloy; Al- or Al-alloy and/or is at least partially rotationally symmetric or flat; stamped or machined.

15. Automotive charging connection, in particular comprising a charging inlet and/or a charging gun, for charging an EV-battery with at least one electric charging contact according to any of the claims 13 or 14.

16. Automotive charging connector according to claim 13, **characterized by** a housing holding the contact, in particular the housing is made from polymer.

17. Automotive charging connector according to claim 13 or 16, **characterized by** an additional housing, and/or an additional active and/or passive cooling element direct linked to the connector or to the busbar / cable.
